# EUROPÄISCHE PATENTANMELDUNG

(11) **EP 0 772 141 A2**
(43) Veröffentlichungstag der Anmeldung: **07.05.1997**
(21) Anmeldenummer: 96117663.3
(22) Anmeldetag: 05.11.1996
(51) Int. Cl.: G06F 17/60

(54) **Verfahren zur Dokumentation von Arbeitsprozessen**

(30) Priorität: 06.11.1995 DE 19541269
(71) Anmelder: Münker, Kerstin, 22926 Ahrensburg (DE); Jansen-Dittmer, Hinrich, 23881 Breitenfelde (DE)
(72) Erfinder: Münker, Kerstin, 22926 Ahrensburg (DE); Jansen-Dittmer, Hinrich, 23881 Breitenfelde (DE)
(74) Vertreter: Castell, Klaus, Dr.-Ing.

(57) **Zusammenfassung**

Bei dem Verfahren werden in einem Computer aus einem Arbeitsschrittspeicher verschiedene Arbeitsschritte mit ihren jeweiligen Zeiten in Form einer Vorlagenschablone zusammengestellt und als Vorlagenblatt ausgedruckt. Das Vorlagenblatt erhält Freiräume, in denen qualitative und/oder quantitative Daten eingetragen werden können. Dieses Vorlagenblatt hilft dem Durchführer der Arbeitsprozesses bei der Durchführung der Arbeitsschritte und nach Durchführung der einzelnen Arbeitsschritte sollen diese auf dem Vorlagenblatt dokumentiert werden. Nach Durchführung des Arbeitsprozesses wird das ausgefüllte Vorlagenblatt mittels eines Scanners in den Computer eingelesen und steht zur weiteren Verarbeitung der den Arbeitsprozeß dokumentierenden Daten zur Verfügung.

## Beschreibung

Die Erfindung betrifft ein Verfahren zur Dokumentation von Arbeitsprozessen.

Verstärkte Anforderungen von Seiten der Qualitätskontrolle, das Bedürfnis nach Effizienzsteigerung in Arbeitsprozessen und auch juristische Aspekte führen zu immer umfangreicheren Dokumentationen durchgeführter Arbeiten. Diese Dokumentationen liegen in ihrer einfachsten Form als Berichtsschreiben vor. Bei sich stetig wiederholenden Arbeitsprozessen ist es jedoch auch möglich, Formulare zu entwerfen, in denen die Arbeitsschritte der Arbeitsprozesse dokumentiert werden. Die verstärkte Einführung von Computern in allen Bereichen des täglichen Lebens hat dazu geführt, daß auch die Dokumentation von Arbeitsprozessen in vielen Fällen direkt am Computer vorgenommen wird. Kleincomputer oder vernetzte Systeme erlauben eine Dokumentation direkt vor Ort und somit im direkten Anschluß an einzelne Arbeitsschritte der Arbeitsprozesse.

Die Dokumentation von Arbeitsprozessen auf Papierunterlagen erleichtert dem Personal die Durchführung der Dokumentation und erlaubt eine Dokumentation mit minimalem apparativen Aufwand. Außerdem dienen beschriebene Papiere als Dokumente, die auch bei juristischen Fragen zum durchgeführten Arbeitsprozeß leichter als Nachweis anerkannt werden, als in einem Computer gespeicherte Daten.

Andererseits bietet die Dokumentation an einem Computer die Möglichkeit der leichten Erstellung von ordentlichen Listen und erschließt ein breites Feld der Verarbeitung der im Computer digital vorliegenden Daten.

Zur Dokumentation vieler Arbeitsprozesse wäre es wünschenswert, die Vorteile der Dokumentation auf Papier mit den Vorteilen der Dokumentation im Computer zu verbinden. Dies ist möglich, indem ein zum Arbeitsprozeß passendes Formular in großer Stückzahl gedruckt wird, während des Arbeitsprozesses ausgefüllt wird und anschließend über einen Scanner in einen Computer eingelesen wird.

Derartige Formulare sind für starre Arbeitsprozesse sehr gut geeignet. Für individuelle Arbeitsprozesse oder Arbeitsprozesse die sich im Laufe der Zeit sehr schnell ändern, ist dieses Verfahren jedoch nicht geeignet.

Der Erfindung liegt daher die Aufgabe zugrunde, ein Verfahren zur Dokumentation von Arbeitsprozessen bereitzustellen, das zur Dokumentation individueller, im Regelfall nicht ständig wiederholter Arbeitsprozesse geeignet ist.

Das erfindungsgem. Verfahren zeichnet sich dadurch aus, daß
- ein Format in einen Speicher eines Computers eingegeben wird,
- Arbeitsschritte und Durchführungszeiten des Arbeitsprozesses im eingegebenen Format als Vorlagenschablone in den Speicher eingegeben werden,
- ein Vorlagenblatt mit Arbeitsschritten und Durchführungszeiten des Arbeitsprozesses für ein bestimmtes Zeitintervall aus dem Computer ausgegeben wird, in dem den Arbeitsschritten jeweils mindestens ein Feld für qualitative und/oder quantitative Angaben zugeordnet ist,
- qualitative und/oder quantitative Angaben in das Vorlagenblatt eingetragen werden,
- die Angaben vom Vorlagenblatt in den Computer eingelesen werden und
- im eingegebenen Format in den Speicher eingegeben werden.

Das erfindungsgem. Verfahren erlaubt es einerseits, die Vorteile von Dokumentationen auf Papiervorlagen mit den Vorteilen der Dokumentation in einem Computer zu verbinden und andererseits hat es den großen Vorteil, daß mit ihm auf einfache Art und Weise individuelle Arbeitsprozesse dokumentiert werden können.

Das Verfahren verbindet auf einfache Weise Planung, Durchführung und Dokumentation bzw. Kontrolle. Im Planungsschritt werden die Arbeitsschritte und Durchführungszeiten gesammelt und in einem speziellen Format in den Computer eingegeben. Die Durchführung wird durch ein Vorlagenblatt unterstützt, in dem Arbeitsschritte und Durchführungszeiten beschrieben sind. Das Vorlagenblatt wird für ein bestimmtes Zeitintervall ausgedruckt, das ein Zeitfenster aus dem gesamten Planungsabschnitt darstellt, und zeigt somit dem Durchführer des Arbeitsprozesses genau die von ihm selbst oder einer fremden Person geplanten Arbeitsschritte und Durchführungszeiten. Außerdem hat das Vorlagenblatt Freiraum für Eingaben des Durchführers des Arbeitsprozesses, wo er qualitative und/oder quantitative Angaben zu den einzelnen Arbeitsschritten in das Vorlagenblatt eingeben kann. Diese Angaben können ein einfacher Haken sein, als Zeichen dafür, daß der Arbeitsschritt durchgeführt worden ist, es kann an einer entsprechenden Stelle unterschrieben werden und Zahlenangaben können das Ergebnis des Arbeitsschritts direkt oder als verschlüsselte Information dokumentieren. In den Freiraum, der als Feld ausgeführt ist, können aber auch handschriftliche Notizen eingetragen werden, um vollständig individuelle Informationen zum jeweiligen Arbeitsschritt zu dokumentieren.

In Pausen des Arbeitsprozesses oder nach dem Arbeitsprozeß werden die Angaben vom Vorlagenblatt in den Computer eingelesen. Hierzu dient ein einfacher Scanner, der die Daten vom Blatt abliest und in den Computer eingibt.

Das anfangs in den Computer eingegebene Format erlaubt eine genaue Zuordnung der eingelesenen Angaben zu den Arbeitsschritten und Durchführungszeiten und es ist daher nur notwendig, die Felder für qualitative und/oder quantitative Angaben zu lesen. Der Scanner kann daher sehr schnell arbeiten, obwohl er die Daten von individuell gestalteten Vorlagenblättern aufnimmt.

Bei der gleichzeitigen Verwendung verschiedener Vorlagenschablonen und verschiedener Vorlagenblätter dient eine einfache Kennung am Vorlagenblatt der Zuordnung zwischen Vorlagenblatt und Vorlagenschablone.

Das Ergebnis des Verfahrens liegt darin, daß letztendlich die vor Ort aufgenommenen Daten in einem vorgegebenen Format im Speicher des Computers zur weiteren Verarbeitung zur Verfügung stehen. Das vorgegebene Format erlaubt die Erstellung von Listen, die selektive Kontrolle und vor allem die weitere Planung auf der Grundlage der digital vorliegenden Dokumentation.

Vorteilhaft ist es, wenn das Verfahren gleichzeitig für verschiedene Arbeitsprozesse durchgeführt wird. Durch die Trennung von Planung, Durchführung und Auswertung können verschiedene Arbeitsprozesse geplant werden, während andere Arbeitsprozesse durchgeführt und wieder andere ausgewertet werden. Da der gesamte Arbeitsprozeß durchgeführt werden kann, ohne daß zwischenzeitlich auf die Daten des Computers zurückgegriffen werden muß, steht der Computer während der Durchführung des Arbeitsprozesses für Planungs- und Auswerteoperationen zur Verfügung.

Eine vorteilhafte Ausgestaltung des erfindungsgem. Verfahrens sieht vor, daß Arbeitsschritte und/oder Arbeitsschrittfolgen mit relativen Zeiten im eingegebenen Format aus einem zuvor programmierten Arbeitsschrittspeicher entnommen werden. Da sich bei vielen Arbeitsprozessen Arbeitsschritte oder sogar Arbeitsschrittfolgen wiederholen, ist es günstig, wenn diese häufig verwendeten Arbeitsschritte programmiert vorliegen und durch einfaches Anwählen zur Erstellung der Vorlagenschablone in den Speicher eingegeben werden können. Arbeitsschrittfolgen sind dabei verständlicherweise mit relativen Zeiten angegeben, wobei der Computer nach Angabe der fixen Zeit eines Arbeitsschrittes die Zeiten der übrigen Arbeitsschritte berechnet.

Vorteilhafterweise ist dieser Arbeitsschrittspeicher hierarchisch aufgebaut und ermöglicht es somit, menügeführt oder anhand von Listen auf einfache Art und Weise die gesuchten Arbeitsschritte und Arbeitsschrittfolgen zu finden.

Eine vorteilhafte Ausgestaltung des Vorlagenblattes sieht vor, daß die Angaben auf dem Vorlagenblatt mit OCR weiterverarbeitet werden. Der Computer übernimmt dabei nicht nur die graphische Darstellung der in das Vorlagenblatt eingegebenen Angaben als Bild, sondern ordnet der Graphik Buchstaben und Zahlenwerte zu, die leichter digital abspeicherbar sind und besser zu werten sind.

Dazu ist es vorteilhaft, wenn Buchstabenfelder auf dem Vorlagenblatt vorgesehen werden, da dies hilft, die Angaben an der richtigen Stelle einzutragen und die weitere Verarbeitung erleichtert.

Prinzipiell reicht es aus, nur die Felder mit qualitativen und/oder quantitativen Angaben über den Scanner in den Computer einzulesen. In vielen Fällen bringt es jedoch Vorteile, wenn alle Angaben des Vorlagenblattes in den Computer eingelesen werden. Bspw. ist es möglich, daß auf dem Vorlagenblatt im Bereich der Angabe der Arbeitsschritte oder der Arbeitszeiten Änderungen vorgenommen worden sind, die bei einem ausschließlichen Lesen der Felder für qualitative und/oder quantitative Angaben übersehen werden. Wenn ein rechtsgültiges Dokumentenabbild im Computer zur Verfügung gestellt werden soll, das mit dem ausgefüllten Vorlagenblatt identisch ist, müssen daher alle Angaben des Vorlagenblattes in den Computer eingelesen werden. Vorteilhaft ist in diesem Fall ein direkter Vergleich der eingelesenen Angaben des Vorlagenblattes mit der Vorlagenschablone und eine Abspeicherung nur der Bereiche, in denen das Vorlagenblatt von der Vorlagenschablone abweicht.

Ein Ausführungsbeispiel des erfindungsgem. Verfahrens ist in der Zeichnung dargestellt und wird im Folgenden näher beschrieben.

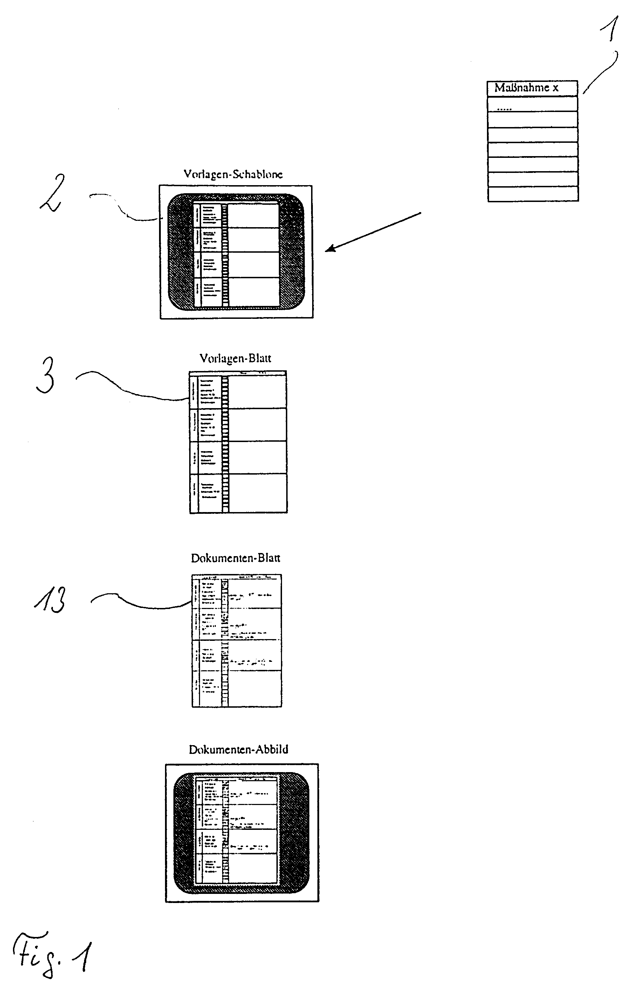

Es zeigt
- Fig. 1: eine schematische Darstellung des erfindungsgem. Verfahrens
- Fig. 2: eine Vorlagenschablone
- Fig. 3: ein ausgefülltes Vorlagenblatt.

Das erfindungsgem. Verfahren wird am Beispiel der Behandlung von Patienten in einem Krankenhaus erläutert. Dies ist nur eine mögliche Anwendung des erfindungsgem. Verfahrens, das ebenso für die Erstellung oder die Reparatur individueller Gegenstände verwendet werden kann.

Im Beispiel der Patientenbetreuung im Krankenhaus legt der Arzt die Maßnahmen fest, die bspw. im Verlauf der nächsten drei Tage mit einem Patienten durchgeführt werden sollen. Aus dieser Vorgabe hat die Oberschwester eine Planung aufzustellen, in der berücksichtigt ist, zu welchen Zeiten - möglicherweise auch von welchen Personen - welche Maßnahmen an welchem Patienten durchgeführt werden sollen. Dazu werden die vom Arzt vorgegebenen drei Tage in Schichten aufgeteilt, in denen jeweils eine andere Schwester für die Durchführung der vorgegebenen Maßnahmen verantwortlich ist. Die Planung kann dabei auf einfache Art und Weise am Computer durchgeführt werden.

In einem Personal-Computer sind in einem speziellen Speicherbereich alle in diesem Krankenhaus bekannten Arbeitsschritte als Maßnahmen in einem sogenannten. Arbeitsschrittspeicher 1 abgespeichert. Dieser Maßnahmenkatalog kann jederzeit durch zusätzliche Eingaben erweitert werden und es können alte ungebräuchliche Maßnahmen aus dem Arbeitsschrittspeicher 1 gelöscht werden.

Dieser Arbeitsschrittspeicher 1 ist hierarchisch aufgebaut und die Oberschwester kann daher mittels einer einfachen Menüführung die gewünschten, vom Arzt vorgegebenen Maßnahmen zusammensuchen und zu einer Vorlagenschablone 2 zusammenstellen. Jede Vorlagenschablone 2 gibt alle Maßnahmen einer Schicht für einen speziellen Patienten an. Diese Vorlagenschablone 2 kann am Computer beliebig geändert werden und wenn für den Zeitraum einer Schicht für jeden Patienten die Vorlagenschablonen zusammengestellt sind, werden diese als Vorlagenblätter 3 ausgedruckt.

Beim Erstellen der Vorlagenschablonen ist es möglich, zuerst in einem Prozeßplan die einzelnen Maßnahmen mit ihren Zeiten zusammenzustellen, wobei dieser Prozeßplan durchaus auch einen längeren Zeitraum als eine Schicht betreffen kann. Im vorgegebenen Beispiel, in dem der Arzt die Maßnahmen für die nächsten drei Tage angegeben hat, wäre es sinnvoll einen Prozeßplan für die nächsten drei Tage auszuarbeiten. Dazu werden für die nächsten drei Tage die Maßnahmen aus dem Arbeitsschrittspeicher zusammengestellt und diesen Maßnahmen Zeiten zugeordnet. Der Rechner kann dann selbständig alle Maßnahmen einer speziellen Schicht zusammensuchen und im vorgegebenen Format als Vorlagenschablone abbilden.

Da viele Maßnahmen miteinander verbunden sind und in einer bestimmten Zeitfolge hintereinander durchgeführt werden müssen, werden im Arbeitsschrittspeicher 1 auch Arbeitsschrittfolgen abgespeichert, die als Paket abgerufen werden können. Wenn für eine dieser Maßnahmen aus einem Maßnahmenpaket ein Datum angegeben wird, berechnet der Rechner selbständig die Daten der weiteren Maßnahmen, die dann ebenfalls im Prozeßplan erscheinen. In die Vorlagenschablone 2 werden jedoch nur die Maßnahmen aus dem Maßnahmenpaket übernommen, die in der angewählten Schicht durchgeführt werden müssen.

Wenn die Vorlagenschablonen für den Zeitraum einer Schicht für jeden Patienten erstellt sind, werde diese Schablonen als Vorlagenblatt 3 ausgedruckt und der für die Schicht verantwortlichen Schwester ausgehändigt.

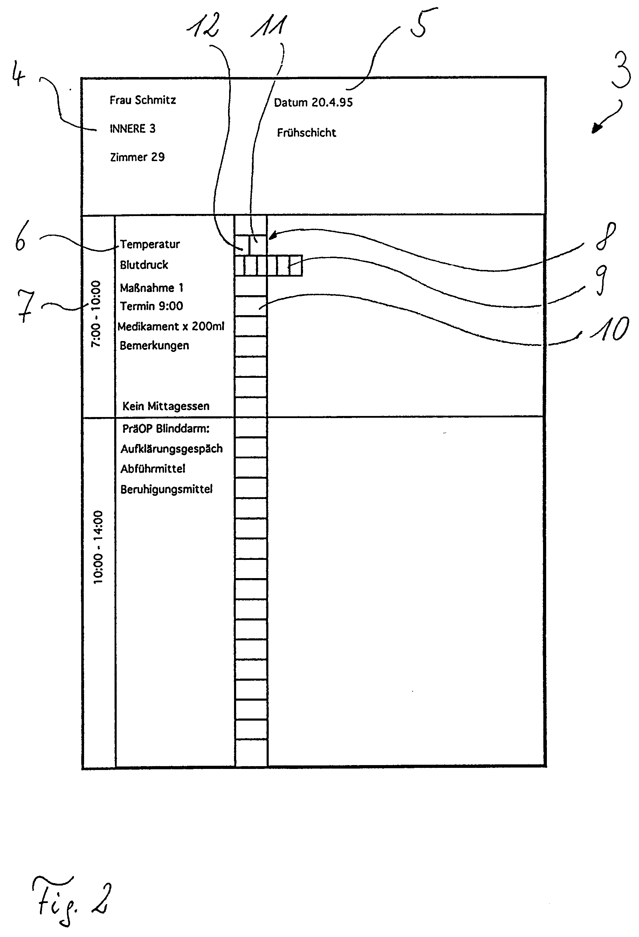

Ein Beispiel eines derartigen Vorlagenblattes ist in der Fig. 2 dargestellt. Das Vorlagenblatt 3 weist die Patientendaten 4 zur Zuordnung des Vorlagenblattes zu einem speziellen Patienten auf. Daneben ist das Datum und die Zeit der Schicht 5 angegeben, für die das Vorlagenblatt 3 erstellt wurde.

Darunter sind Arbeitsschritte 6 und Durchführungszeiten 7 angegeben, die den Arbeitsprozeß der Schwester am speziellen Patienten wiederspiegeln. Neben jedem Arbeitsschritt 6 ist ein Feld 8, 9, 10 für qualitative und/oder quantitative Angaben vorgesehen. Das Feld 8 ist dem Arbeitsschritt Temperatur zugeordnet und erhält zwei Ziffernfelder 11 und 12, in die die beim Fiebermessen ermittelte Temperatur eintragbar ist. Das Feld 9 erhält sechs Ziffernfelder zum Eintragen der beim Blutdruckmessen festgestellten Werte und das Feld 10 ist so gestaltet, daß mit einem einfachen Haken der durchgeführte Arbeitsschritt bestätigt werden kann.

Neben diesen Feldern 8, 9, 10 ist ein Freiraum vorgesehen, der es erlaubt, vor allem qualitative Angaben zu machen, die nicht vorhersehbar waren und die daher bei der Planung nicht berücksichtigt werden konnten.

Diese Vorlagenblätter werden für jeden einzelnen Patienten am Anfang einer Schicht an dessen Bett oder im Schwesternzimmer aufgehängt und die Schwester, die den jeweiligen Arbeitsschritt durchführt, trägt die gemessenen Werte, einen Haken oder qualitative Angaben in das Vorlagenblatt 3 ein.

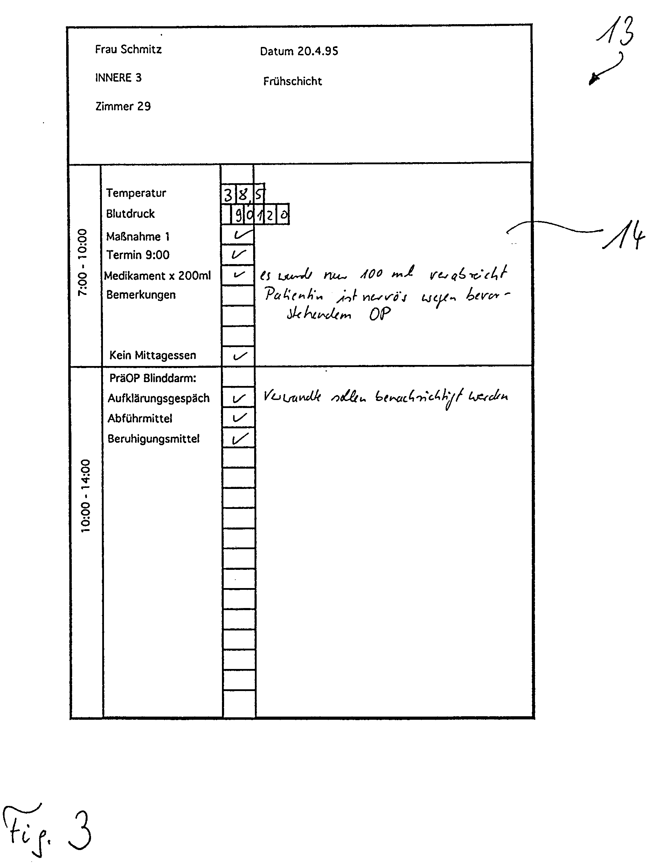

Am Ende der Schicht sollte das Vorlagenblattes ausgefüllt sein und ein Beispiel eines ausgefüllten Vorlagenblattes, das auch als Dokumentenblatt 13 zu bezeichnen ist, ist in Fig. 3 dargestellt. Wie im Vorhergehenden beschrieben, wurden die einzelnen Felder 8, 9, 10 mit quantitativen Werten oder einfachen Haken ausgefüllt und in einem Freifeld 14 wurden handschriftliche qualitative Daten eingegeben.

Diese ausgefüllten Dokumentenblätter 13 werden am Ende der Schicht eingesammelt und über ein Lesegerät in den Computer eingelesen.

Beim Einlesen der Daten von den Dokumentenblättern 13 werden alle Angaben auf dem Dokumentenblatt eingelesen und anschließend mit den Angaben auf der zugehörigen Vorlagenschablone verglichen. Dadurch kann festgestellt werden, ob im Bereich der Patientendaten 4 der Schichtangabe 5, der Arbeitsschritte 6 oder der Durchführungszeiten 7 Änderungen eingetragen worden sind. An den Stellen, an denen Änderungen vorgenommen worden sind, werden diese im Speicher vermerkt und an den Stellen, an denen das Dokumentenblatt mit der Vorlagenschablone übereinstimmt, werden keine zusätzlichen Daten in den Speicher geladen. Das Scannen des gesamten Dokumentenblattes 13 hat den Vorteil, daß jegliche Beschriftung des Dokumentenblattes registriert wird. Wenn jedoch davon ausgegangen werden kann, daß das Pflegepersonal nur in den hierfür vorgesehenen Bereichen Anmerkungen einträgt, ist es ausreichend, nur diese Bereiche einzuscannen.

Die eingescannten Daten werden anschließend mit OCR weiterverarbeitet und stehen zur weiteren Auswertung des Arbeitsprozesses zur Verfügung.

Bspw. können alle nicht mit einem Haken versehenen Arbeitsschritte automatisch separiert werden, um möglicherweise beim Erstellen der Vorlagenschablone 2 für die nächste Schicht berücksichtigt werden zu können. Außerdem kann die Stationsschwester am Bildschirm schnell die durchgeführten Maßnahmen kontrollieren und die so gewonnenen Informationen bei der weiteren Planung berücksichtigen und insbesondere der Erstellung weiterer Vorlagenschablonen zugrundelegen.

Letztendlich liegt die gesamte Dokumentation des Arbeitsprozesses, d. h. im vorliegenden Fall einer bestimmten Pflegezeit, sowohl auf Dokumentenblättern, als auch digital in einem Computer vor. Dies gewährt doppelte Sicherheit beim Verlust einzelner Blätter oder Daten und das erfindungsgem. Verfahren stellt sicher, daß die ausgefüllten Dokumentenblätter immer mit den im Computer gespeicherten Daten übereinstimmen.

Die Ausgabe eines Vorlagenblattes kann, wie im vorliegenden Fall, den Ausdruck eines Papierblattes bedeuten. Es ist jedoch auch möglich, die Papiervorlage durch digitale Schreibtabletts zu ersetzen.

## Patentansprüche

1. Verfahren zur Dokumentation von Arbeitsprozessen, bei dem
- ein Format in einen Speicher eines Computers eingegeben wird,
- Arbeitsschritte (6) und Durchführungszeiten (7) des Arbeitsprozesses im eingegebenen Format als Vorlagenschablone (2) in den Speicher eingegeben werden,
- ein Vorlagenblatt (3) mit Arbeitsschritten (6) und Durchführungszeiten (7) des Arbeitsprozesses für ein bestimmtes Zeitintervall (5) aus dem Computer ausgegeben wird, in dem den Arbeitsschritten (6) jeweils mindestens ein Feld (8, 9, 10, 14) für qualitative und/oder quantitative Angaben zugeordnet ist,
- qualitative und/oder quantitative Angaben in das Vorlagenblatt (3) eingetragen werden,
- die Angaben vom Vorlagenblatt (3) in den Computer eingelesen werden und
- im eingegebenen Format in den Speicher eingegeben werden.

2. Verfahren nach Anspruch 1, dadurch gekennzeichnet, daß das Verfahren gleichzeitig für verschiedene Arbeitsprozesse durchgeführt wird.

3. Verfahren nach einem der vorhergehenden Ansprüche, dadurch gekennzeichnet, daß Arbeitsschritte (6) und/oder Arbeitsschrittfolgen mit relativen Zeiten im eingegebenen Format aus einem zuvor programmierten Arbeitsschrittspeicher (1) entnommen werden.

4. Verfahren nach Anspruch 3, dadurch gekennzeichnet, daß der Arbeitsschrittspeicher (1) hierarchisch aufgebaut ist.

5. Verfahren nach einem der vorhergehenden Ansprüche, dadurch gekennzeichnet, daß die Angaben auf dem Vorlagenblatt (3) mit OCR weiterverarbeitet werden.

6. Verfahren nach einem der vorhergehenden Ansprüche, dadurch gekennzeichnet, daß Ziffernfelder (11, 12) oder Buchstabenfelder auf dem Vorlagenblatt (3) vorgesehen werden.

7. Verfahren nach einem der vorhergehenden Ansprüche, dadurch gekennzeichnet, daß alle Angaben des Vorlagenblattes (3) in den Computer eingelesen werden.

8. Verfahren nach einem der vorhergehenden Ansprüche, dadurch gekennzeichnet, daß durch Vergleich der in den Speicher eingegebenen Angaben vom Vorlagenblatt (3) mit den eingegebenen Arbeitsschritten (6) und Durchführungszeiten (7) des Arbeitsprozesses Daten des Speichers gelöscht oder geändert werden.
